# FASCICULE DE BREVET EUROPEEN

(11) **EP 3 060 418 B1**
(45) Date de publication et mention de la délivrance du brevet: **19.06.2019**
(21) Numéro de dépôt: 14786897.0
(22) Date de dépôt: 21.10.2014
(51) Int. Cl.: B60H 3/06, B60H 1/00

(54) **TRAPPE A FILTRE POUR DISPOSITIF THÉRMIQUE DE VÉHICULE AUTOMOBILE**
FILTERABSCHEIDERGEHÄUSE FÜR EINE KRAFTFAHRZEUGWÄRMEVORRICHTUNG
FILTER TRAP FOR A MOTOR VEHICLE THERMAL DEVICE

(30) Priorité: 23.10.2013 FR 1360315
(43) Date de publication de la demande: 31.08.2016
(73) Titulaire: Renault s.a.s., 92100 Boulogne-Billancourt (FR)
(72) Inventeur: PAIN, Olivier, F-78300 Poissy (FR)
(86) Numéro de dépôt international: PCT/EP2014/072485
(87) Numéro de publication internationale: WO 2015/059111

(56) Documents cités:
- EP-A2- 1 745 955
- DE-U1-202005 011 002

## Description

L'invention concerne une trappe à filtre pour dispositif thermique de véhicule automobile.

Dans un véhicule automobile, l'air peut être pulsé à l'intérieur de l'habitacle par un dispositif thermique, lequel peut chauffer ou refroidir l'air pulsé selon les besoins. Ce dispositif thermique est situé dans l'habitacle, sous la planche de bord, contre une pièce de tôlerie généralement appelée tablier, qui sépare l'habitacle du compartiment moteur. Le dispositif thermique est équipé notamment d'un filtre lequel doit être accessible depuis l'habitacle pour permettre son changement. A cet effet, l'enveloppe du dispositif thermique comporte une trappe dont l'ouverture permet l'accès à ce filtre. Les trappes actuelles sont insérées à l'une de leur extrémité dans l'enveloppe, parallèlement à la surface de l'enveloppe et fixées à l'enveloppe par clippage à leur autre extrémité afin de permettre une ouverture rapide et sans outil de la trappe. On utilise généralement deux clips situés en regard l'un de l'autre à l'une des extrémités de la trappe. Ces clips sont conçus de manière à bloquer tout mouvement de la trappe perpendiculairement à sa surface : ils présentent par conséquent un encombrement notable dans cette direction perpendiculaire. Or, la trappe d'un dispositif thermique est dans certains cas disposée du côté du conducteur, à proximité de la pédale d'accélération. Lorsque l'espace disponible autour de la pédale est peu important, il peut s'avérer difficile d'utiliser de tels clips pour fixer la trappe, ces clips risquant en effet de gêner le pied du conducteur actionnant la pédale. Par ailleurs, l'utilisation de vis, moins encombrantes, n'est pas souhaitée car cela nécessite l'utilisation d'un outil dans un environnement particulièrement restreint et difficile d'accès. De plus l'ajout d'une vis est plus coûteux qu'un clip.

Le document DE202005011002 décrit une trappe à filtre pour dispositif thermique de véhicule automobile, ladite trappe en matériau polymère étant de forme plane allongée et présentant deux bords longitudinaux s'étendant suivant sa longueur reliés par deux bords latéraux s'étendant suivant sa largeur, ladite trappe comprenant :
- une première patte d'assemblage s'étendant dans le prolongement de la trappe suivant la longueur de celle-ci, ladite première patte d'assemblage étant solidaire d'un bord latéral,
- un moyen d'encliquetage conçu pour bloquer ladite trappe suivant une direction normale au plan de la trappe, ledit moyen d'encliquetage étant solidaire d'un bord longitudinal,
- une deuxième patte d'assemblage s'étendant dans le prolongement de la trappe suivant une direction perpendiculaire à la première patte d'assemblage, ladite deuxième patte d'assemblage étant solidaire du bord longitudinal.

Il existe donc un besoin pour une trappe à filtre de dispositif thermique qui puisse être fixée de manière simple et rapide, et qui présente un faible encombrement.

A cet effet, l'objet de l'invention concerne une trappe à filtre pour dispositif thermique de véhicule automobile, ladite trappe en matériau polymère étant de forme plane allongée de longueur L et présentant deux bords longitudinaux s'étendant suivant sa longueur reliés par deux bords latéraux s'étendant suivant sa largeur, ladite trappe comprenant :
- une première patte d'assemblage s'étendant dans le prolongement de la trappe suivant la longueur de celle-ci, ladite première patte d'assemblage étant solidaire d'un bord latéral,
- un moyen d'encliquetage conçu pour bloquer ladite trappe suivant une direction normale au plan de la trappe, ledit moyen d'encliquetage étant solidaire d'un bord longitudinal et situé à proximité du bord latéral ne portant pas la première patte d'assemblage,
- une deuxième patte d'assemblage s'étendant dans le prolongement de la trappe suivant une direction perpendiculaire à la première patte d'assemblage, ladite deuxième patte d'assemblage étant solidaire du bord longitudinal ne comportant pas le moyen d'encliquetage et étant située à proximité du bord latéral ne portant pas la première patte d'assemblage,
ladite trappe étant conçue et agencée de manière à présenter une flexibilité suffisante suivant sa longueur pour permettre une torsion de ladite trappe autour d'un axe longitudinal de torsion de la trappe, par exemple un axe longitudinal médian.

La trappe selon l'invention peut être ainsi être maintenue par insertion de ses pattes d'assemblage dans des espaces de forme complémentaire du dispositif thermique, assurant un blocage de la trappe suivant la longueur et la largeur de la trappe, mais également selon une direction normale à son plan, le moyen d'encliquetage assurant un plaquage de la trappe contre l'ouverture du dispositif thermique en bloquant tout mouvement suivant cette même direction normale. On comprend ainsi que les deux pattes d'assemblage présentent un encombrement réduit suivant la direction normale au plan de la trappe. En outre, la trappe peut être montée et démontée sans outil. Notamment, pour son démontage, il suffit de désengager le moyen d'encliquetage puis d'effectuer une torsion de la trappe autour de son axe longitudinal de torsion, ce qui permet de désengager la deuxième patte d'assemblage, la première patte d'assemblage pouvant être aisément désengagée par la suite.

Avantageusement et de manière non limitative, la trappe est conçue et agencée de sorte que la déformation subie lors de la torsion soit temporaire et réversible. Dit autrement, la trappe présente une élasticité suffisante pour redevenir plane après torsion.

Avantageusement et de manière non limitative, la trappe à filtre selon l'invention peut être conçue et agencée de manière à permettre un angle de torsion (α) de 15° à 50° entre les deux bords latéraux de la trappe, de préférence d'un angle de torsion (α) de 20° à 45°. Ceci peut favoriser une déformation temporaire et réversible de la trappe.

Avantageusement et de manière non limitative, le moyen d'encliquetage et la deuxième patte d'assemblage peuvent être disposés symétriquement par rapport à l'axe longitudinal de torsion de la trappe. Ceci peut permettre d'homogénéiser les contraintes subies par la trappe fixée.

Afin de faciliter la torsion de la trappe, et notamment une torsion ne provoquant pas de déformation permanente de la trappe, le moyen d'encliquetage et la deuxième patte d'assemblage peuvent être distants du bord latéral adjacent d'une distance D inférieure ou égale à L/3, de préférence inférieure ou égale à L/4, voire à L/6. Le moyen d'encliquetage et la deuxième patte d'assemblage peuvent être distants du bord latéral adjacent d'une même distance (ils sont alors symétriques) ou d'une distance différente respectant les rapports ci-dessus mentionnés.

Dans la présente invention, une patte s'étend dans le prolongement de la trappe lorsqu'elle s'étend parallèlement à la trappe, mais présente une épaisseur égale ou inférieure à l'épaisseur de la trappe. Autrement dit, les faces de la patte sont parallèles aux faces de la trappe et l'épaisseur de la patte n'est pas supérieure à l'épaisseur de la trappe.

Avantageusement et de manière non limitative, les première et deuxième pattes d'assemblage peuvent présenter une épaisseur inférieure à une épaisseur de ladite trappe, par exemple égale au plus à 90%, voire égale au plus à 70% de l'épaisseur de ladite trappe. Ceci peut permettre de réduire l'encombrement total de la trappe et des moyens de maintien de la trappe prévus sur le dispositif thermique.

Avantageusement et de manière non limitative, les première et deuxième pattes d'assemblage peuvent présenter une face s'étendant dans le prolongement d'une face de la trappe, par exemple dans le prolongement d'une face de la trappe destinée à être disposée en regard de l'ouverture du dispositif thermique. Ceci peut également permettre de réduire l'encombrement total de la trappe et des moyens de fixation de la trappe présents sur le dispositif thermique.

L'invention concerne également un dispositif thermique de véhicule automobile comprenant une enveloppe percée d'une ouverture d'accès à un filtre, ladite enveloppe étant équipée d'une trappe à filtre selon l'invention conformée pour obturée ladite ouverture, ledit dispositif thermique comprenant, sur le pourtour de ladite ouverture :
- un moyen de mise en prise conformé pour coopérer avec le moyen d'encliquetage de la trappe afin de bloquer la trappe suivant une direction normale à son plan,
- une première patte de maintien et une deuxième patte de maintien, chaque patte de maintien définissant avec l'enveloppe un espace de forme complémentaire d'une patte d'assemblage, les première et deuxième pattes de maintien étant positionnées de sorte que les première et deuxième pattes d'assemblage respectivement soient insérées entre lesdites pattes de maintien et l'enveloppe lorsque ladite trappe obture l'ouverture.

Le maintien de la trappe peut ainsi être obtenu de manière simple et peu coûteuse, et ce d'autant plus que l'enveloppe d'un dispositif thermique est également généralement en matériau polymère.

Le matériau polymère utilisé pour l'enveloppe du dispositif thermique et la trappe est un matériau polymère utilisé habituellement pour ces utilisations, par exemple du polypropylène.

Avantageusement et de manière non limitée, la hauteur maximale d'une patte de maintien perpendiculairement à la surface de l'enveloppe peut être inférieure ou égale à deux fois l'épaisseur de la trappe, permettant ainsi de limiter l'encombrement du dispositif thermique autour de la trappe. Un jeu de l'ordre de 0,01mm à 0,2 mm, de préférence de 0,05 mm à 0,15 mm, par exemple de 0,1 mm, pourra être prévu entre la deuxième patte de fixation et la deuxième patte de maintien, perpendiculairement à la trappe, afin de faciliter le montage et le démontage de la trappe.

L'invention concerne également un véhicule automobile équipé d'un dispositif thermique selon l'invention.

L'invention est maintenant décrite en référence aux dessins annexés, non limitatifs, dans lesquels :
- la figure 1 représente une vue partielle d'un dispositif thermique équipé d'une trappe à filtre selon un mode de réalisation de l'invention,
- la figure 2 représente schématiquement la trappe à filtre de la figure 1, la figure 2a montre une section de la figure 2 selon la ligne A-A et la figure 2b représente schématiquement la trappe vue selon l'axe longitudinal de torsion T de la figure 2, la trappe subissant une torsion.

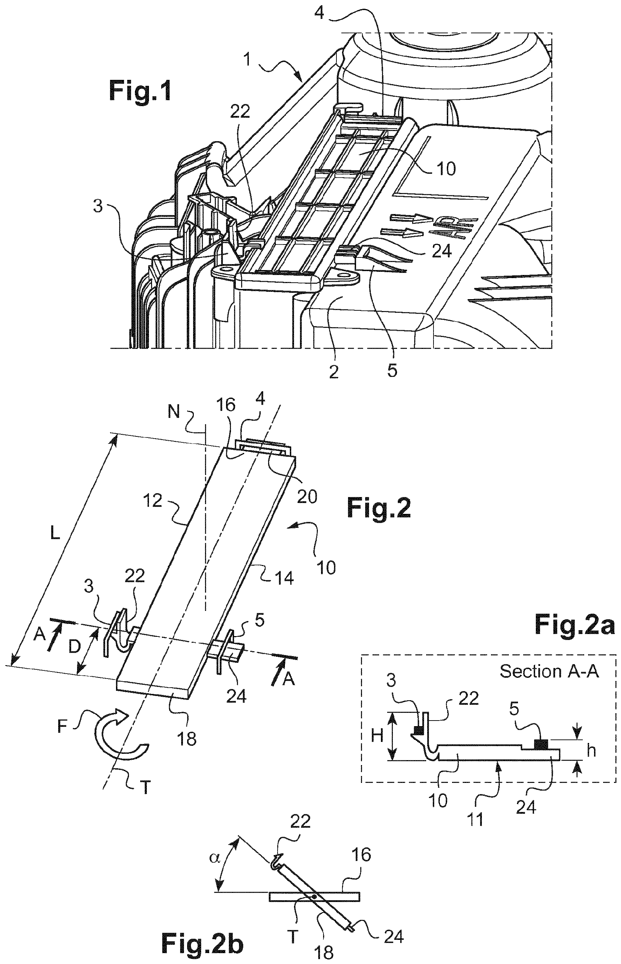

La figure 1 représente partiellement un dispositif thermique 1 comprenant une enveloppe 2 équipée d'une trappe à filtre 10 selon un mode de réalisation de l'invention. Cette trappe à filtre 10 obture une ouverture d'accès à un filtre, cette ouverture étant cachée par la trappe 10 sur la figure 1. Cette trappe 10 est représentée seule sur les figures 2, 2a, 2b, sur lesquelles figurent également les moyens de maintien de la trappe lesquels sont solidaires du dispositif thermique 1.

La trappe 10 est en matériau polymère, par exemple en polypropylène. Cette trappe 10 est de forme plane allongée de longueur L. Elle se présente sous la forme d'une plaque nervurée dans l'exemple. La trappe 10 présente deux bords longitudinaux 12, 14 s'étendant suivant sa longueur et reliés par deux bords latéraux 16, 18 s'étendant suivant sa largeur.

La trappe 10 comprend également une première patte d'assemblage 20 s'étendant dans le prolongement de la trappe 10 suivant la longueur de celle-ci, cette première patte d'assemblage 20 étant solidaire d'un bord latéral 16. Dans l'exemple représenté, cette première patte d'assemblage 20 est de forme rectangulaire, et s'étend sur une partie de la largeur de la trappe 10.

La trappe 10 comprend également un moyen d'encliquetage 22 conçu pour bloquer la trappe 10 suivant une direction N normale au plan de la trappe 10. Ce moyen d'encliquetage 22 est solidaire d'un bord longitudinal 12 et situé à proximité du bord latéral 18 ne portant pas la première patte d'assemblage 20.

La trappe 10 comprend enfin une deuxième patte d'assemblage 24 s'étendant dans le prolongement de la trappe 10 suivant une direction perpendiculaire à la première patte d'assemblage 22. Dans le présent exemple, la trappe 10 étant de forme rectangulaire, les pattes d'assemblage 20, 24 sont ainsi portées par des bords perpendiculaires. Notamment, la deuxième patte d'assemblage 24 est solidaire du bord longitudinal 14 ne comportant pas le moyen d'encliquetage 22 et est située à proximité du bord latéral 18 ne portant pas la première patte d'assemblage 20.

Afin de permettre son montage et son démontage, la trappe 10 est conçue et agencée de manière à présenter une flexibilité suffisante suivant sa longueur pour permettre une torsion autour d'un axe longitudinal de torsion T, cette torsion étant de préférence obtenue manuellement, sans outil, et étant réversible.

Ceci peut être obtenu en choisissant de manière appropriée les dimensions de la trappe en fonction du matériau utilisé. Par exemple, pour du polypropylène, par exemple contenant 20% en poids de talc (PP-TD20), la trappe peut présenter une longueur de 215mm et une largeur de 34mm pour une épaisseur moyenne de 1,4mm, soit un rapport largeur / longueur de 0,15. Ces dimensions pourront être adaptées par l'homme du métier en fonction du matériau utilisé.

Dans l'exemple représenté, l'axe longitudinal de torsion T est un axe longitudinal médian de la trappe, tel que visible sur la figure 2. La trappe 10 est notamment conçue et agencée de manière à permettre un angle de torsion α de 15° à 50° entre les deux bords latéraux 16, 18 de la trappe, de préférence d'un angle de torsion de 20° à 45°. Cet angle est représenté symboliquement sur la figure 2b, laquelle représente schématiquement uniquement les bords latéraux 16, 18 de la trappe 10, vus selon l'axe longitudinal de torsion T, lors de la torsion de la trappe.

Dans cet exemple, la deuxième patte d'assemblage 24 est également rectangulaire. En outre, le moyen d'encliquetage 22 et la deuxième patte d'assemblage 24 sont disposés symétriquement par rapport à l'axe longitudinal de torsion T de la trappe. Autrement dit, le moyen d'encliquetage 22 et la deuxième patte d'assemblage 24 sont situés à une même distance D du bord latéral 18 adjacent, cette distance étant inférieure ou égale à L/3, notamment inférieure ou égale à L/4, voire L/6. Cette distance D est mesurée depuis le centre du moyen d'encliquetage 22, respectivement depuis le centre de la deuxième patte d'assemblage 24.

L'invention n'est toutefois pas limitée à cette réalisation particulière et le moyen d'encliquetage 22 et la deuxième patte d'assemblage 24 pourraient être chacun disposé à une distance D différente du bord latéral 18 adjacent, cette distance D étant de préférence inférieure ou égale à L/3, de préférence inférieure ou égale à L/4.

Dans l'exemple représenté, les première et deuxième pattes d'assemblage 20, 24 présentent une épaisseur inférieure à une épaisseur de ladite trappe, l'une des faces de ces pattes d'assemblage 20, 24 s'étendant dans le prolongement d'une face 11 de la trappe, ici la face destinée à obturer l'ouverture du dispositif thermique 1 (figure 2a).

Le dispositif thermique 1 comprend, sur le pourtour de l'ouverture fermée par la trappe 10 :
- un moyen de mise en prise 3 conformé pour coopérer avec le moyen d'encliquetage 20 de la trappe 10 afin de bloquer la trappe suivant la direction N normale à son plan,
- une première patte de maintien 4 et une deuxième patte de maintien 5, chaque patte de maintien 4, 5 définissant avec l'enveloppe 2 un espace de forme complémentaire d'une patte d'assemblage 20, 24, les première et deuxième pattes de maintien 4, 5 étant positionnées de sorte que les première et deuxième pattes d'assemblage 20, 24 respectivement soient insérées entre lesdites pattes de maintien 4, 5 et l'enveloppe 2 lorsque la trappe 10 obture l'ouverture.

Dans l'exemple, la hauteur maximale h d'une patte de maintien perpendiculairement à la surface de l'enveloppe 2 (et donc de la trappe 10) est inférieure ou égale à deux fois l'épaisseur de la trappe (suivant cette même direction) et inférieure à la hauteur H du moyen d'encliquetage (voir figure 2a). On observe ainsi que l'encombrement, suivant la normale N de la trappe 10 et de son moyen de maintien 5 est réduit, ce qui peut permettre de le disposer dans une zone peu spacieuse du véhicule, sans risque de gêner les occupants du véhicule.

Le montage de la trappe 10 peut être effectué de la manière suivante. La première patte d'assemblage 20 est insérée sous la patte de maintien 4 de l'enveloppe 2 du dispositif thermique 1, puis une torsion d'un angle (α) est appliquée sur la trappe 10 par rotation de son bord latéral 18 dans la direction de la flèche F représentée sur la figure 2, le bord latéral 16 restant immobile. Cette torsion permet l'insertion de la deuxième patte d'assemblage 24 sous la patte de maintien 5 correspondante de l'enveloppe 2. Le relâchement de la trappe 10 permet son retour à l'état plan et la mise en prise du moyen d'encliquetage 22 et du moyen de mise en prise 3 de l'enveloppe (figure 2a). Le démontage est obtenu en réalisant les opérations ci-dessus dans le sens inverse, à savoir : dégagement du moyen d'encliquetage 22, torsion de la trappe 10 dans le même sens que lors du montage, dégagement de la deuxième patte d'assemblage 24 puis dégagement de la première patte d'assemblage 20.

De manière usuelle, quel que soit l'agencement et/ou le positionnement des pattes d'assemblage et du moyen d'encliquetage, la trappe 10 peut en outre comprendre une rainure sur le pourtour de sa face 11 appliquée contre l'ouverture de l'enveloppe 2, cette rainure coopérant avec une nervure complémentaire de l'enveloppe 2 réalisée sur le pourtour de l'ouverture. Ces nervure/rainure participent au maintien de la trappe sur l'enveloppe, notamment dans le plan de la trappe, ainsi qu'à l'étanchéité à l'air de la trappe en position fermée.

## Revendications

1. Trappe à filtre (10) pour dispositif thermique (1) de véhicule automobile, ladite trappe (10) en matériau polymère étant de forme plane allongée de longueur L et présentant deux bords longitudinaux (12, 14) s'étendant suivant sa longueur reliés par deux bords latéraux (16, 18) s'étendant suivant sa largeur, ladite trappe (10) comprenant :
- une première patte d'assemblage (20) s'étendant dans le prolongement de la trappe (10) suivant la longueur de celle-ci, ladite première patte d'assemblage (20) étant solidaire d'un bord latéral (16),
- un moyen d'encliquetage (22) conçu pour bloquer ladite trappe (10) suivant une direction (N) normale au plan de la trappe, ledit moyen d'encliquetage (22) étant solidaire d'un bord longitudinal (12),
- une deuxième patte d'assemblage (24) s'étendant dans le prolongement de la trappe (10) suivant une direction perpendiculaire à la première patte d'assemblage (20), ladite deuxième patte d'assemblage (24) étant solidaire du bord longitudinal (14),
ladite trappe (10) étant conçue et agencée de manière à présenter une flexibilité suffisante suivant sa longueur pour permettre une torsion de ladite trappe autour d'un axe longitudinal de torsion (T) de la trappe, **caractérisée en ce que** ledit moyen d'encliquetage (22) est situé à proximité du bord latéral (18) ne portant pas la première patte d'assemblage (20) et **en ce que** la deuxième patte d'assemblage (24) ne comporte pas le moyen d'encliquetage (22) et est située à proximité du bord latéral (18) ne portant pas la première patte d'assemblage (20).

2. Trappe (10) selon la revendication 1, **caractérisée en ce qu'**elle est conçue et agencée de manière à permettre un angle de torsion (α) de 15° à 50° entre les deux bords latéraux (16, 18) de la trappe, de préférence d'un angle de torsion (α) de 20° à 45°.

3. Trappe (10) selon l'une des revendications 1 ou 2, **caractérisée en ce que** le moyen d'encliquetage (22) et la deuxième patte d'assemblage (24) sont disposés symétriquement par rapport à l'axe longitudinal de torsion (T) de la trappe.

4. Trappe (10) selon l'une des revendications 1 à 3, **caractérisée en ce que** le moyen d'encliquetage (22) et la deuxième patte d'assemblage (24) sont distants du bord latéral adjacent d'une distance D inférieure ou égale à L/3, de préférence inférieure ou égale à L/4, voire à L/6.

5. Trappe (10) selon l'une des revendications 1 à 4, **caractérisée en ce que** les première et deuxième pattes d'assemblage (20, 24) présentent une épaisseur inférieure à une épaisseur de ladite trappe (10), par exemple égale au plus à 90%, voire égale au plus à 70% de l'épaisseur de ladite trappe.

6. Trappe selon (10) l'une des revendications 1 à 5, **caractérisée en ce que** les première et deuxième pattes d'assemblage (20, 24) présentent une face s'étendant dans le prolongement d'une face (11) de la trappe.

7. Dispositif thermique (1) de véhicule automobile comprenant une enveloppe (2) percée d'une ouverture d'accès à un filtre, ladite enveloppe (2) étant équipée d'une trappe à filtre (10) selon l'une des revendications 1 à 6 conformée pour obturée ladite ouverture, ledit dispositif thermique comprenant, sur le pourtour de ladite ouverture :
- un moyen de mise en prise (3) conformé pour coopérer avec le moyen d'encliquetage (22) de la trappe (10) afin de bloquer la trappe suivant une direction (N) normale à son plan,
- une première patte de maintien (4) et une deuxième patte de maintien (5), chaque patte de maintien (4, 5) définissant avec l'enveloppe (2) un espace de forme complémentaire d'une patte d'assemblage (20, 24), les première et deuxième pattes de maintien (4, 5) étant positionnées de sorte que les première et deuxième pattes d'assemblage (20, 24) respectivement soient insérées entre lesdites pattes de maintien (4, 5) et l'enveloppe (2) lorsque ladite trappe (10) obture l'ouverture.

8. Dispositif thermique selon la revendication 7, **caractérisé en ce que** la hauteur maximale d'une patte de maintien perpendiculairement à la surface de l'enveloppe est inférieure ou égale à deux fois l'épaisseur de la trappe.

9. Véhicule automobile équipé d'un dispositif thermique selon l'une des revendications 7 ou 8.

## Patentansprüche

1. Filterabscheidergehäuse (10) für eine Wärmevorrichtung (1) eines Kraftfahrzeugs, wobei das Abscheidergehäuse (10) aus Polymermaterial von ebene länglicher Form mit einer Länge L ist und zwei Längsränder (12, 14) aufweist, die sich entlang seiner Länge erstrecken, und durch zwei Seitenränder (16, 18) verbunden sind, die sich entlang seiner Breite erstrecken, wobei das Abscheidergehäuse (10) umfasst:
- eine erste Montageklaue (20), die sich in der Verlängerung des Abscheidergehäuses (10) entlang der Länge desselben erstreckt, wobei die erste Montageklaue (20) mit einem Seitenrand (16) verbunden ist,
- ein Einrastmittel (22), das eingerichtet ist, um das Abscheidergehäuse (10) in einer Richtung (N) normal auf die Ebene des Abscheidergehäuses festzustellen, wobei das Einrastmittel (22) mit einem Längsrand (12) verbunden ist,
- eine zweite Montagekaue (24), die sich in der Verlängerung des Abscheidergehäuses (10) in einer Richtung senkrecht auf die erste Montageklaue (20) erstreckt, wobei die zweite Montageklaue (24) mit dem Längsrand (14) verbunden ist,
wobei das Abscheidergehäuse (10) eingerichtet und angeordnet ist, um eine ausreichende Flexibilität entlang seiner Länge aufzuweisen, um eine Torsion des Abscheidergehäuses um eine Längstorsionsachse (T) des Abscheidergehäuses zu ermöglichen, **dadurch gekennzeichnet, dass** das Einrastmittel (22) in der Nähe des Seitenrandes (18), der nicht die erste Montageklaue (20) trägt, angeordnet ist, und dass die zweite Montageklaue (24) nicht das Einrastmittel (22) trägt und in der Nähe des Seitenrandes (18), der nicht die erste Montageklaue (20) trägt, angeordnet ist.

2. Abscheidergehäuse (10) nach Anspruch 1, **dadurch gekennzeichnet, dass** es eingerichtet und angeordnet ist, um einen Torsionswinkel (α) von 15° bis 50° zwischen den zwei Seitenrändern (16, 18) des Abscheidergehäuses zu ermöglichen, vorzugsweise um einen Torsionswinkel (α) von 20° bis 45°.

3. Abscheidergehäuse (10) nach einem der Ansprüche 1 oder 2, **dadurch gekennzeichnet, dass** das Einrastmittel (22) und die zweite Montageklaue (24) symmetrisch zur Längstorsionsachse (T) des Abscheidergehäuses angeordnet sind.

4. Abscheidergehäuse (10) nach einem der Ansprüche 1 bis 3, **dadurch gekennzeichnet, dass** das Einrastmittel (22) und die zweite Montageklaue (24) vom angrenzenden Seitenrand um einen Abstand D kleiner oder gleich L/3, vorzugsweise kleiner oder gleich L/4 bzw. L/6 entfernt sind.

5. Abscheidergehäuse (10) nach einem der Ansprüche 1 bis 4, **dadurch gekennzeichnet, dass** die ersten und zweiten Montageklauen (20, 24) eine Geringere Dicke als eine Dicke des Abscheidergehäuses (10) aufweisen, beispielsweise höchstens gleich 90 %, bzw. höchstens gleich 70 % der Dicke des Abscheidergehäuses.

6. Abscheidergehäuse (10) nach einem der Ansprüche 1 bis 5, **dadurch gekennzeichnet, dass** die ersten und zweiten Montageklauen (20, 24) eine Seite aufweisen, die sich in der Verlängerung einer Seite (11) des Abscheidergehäuses erstreckt.

7. Wärmevorrichtung (1) eines Kraftfahrzeugs, umfassend eine Hülle (2), die mit einer Zugangsöffnung für einen Filter versehen ist, wobei die Hülle (2) mit einem Filterabscheidergehäuse (10) nach einem der Ansprüche 1 bis 6 ausgestattet ist, das dazu vorgesehen ist, die Öffnung zu verschließen, wobei die Wärmevorrichtung auf dem Umfang der Öffnung umfasst:
- ein Eingriffsmittel (3), das dazu vorgesehen ist, mit dem Einrastmittel (22) des Abscheidergehäuses (10) zusammenzuwirken, um das Abscheidergehäuse in einer Richtung (N) normal auf seine Ebene festzustellen,
- eine erste Halteklaue (4) und eine zweite Halteklaue (5), wobei jede Halteklaue (4, 5) mit der Hülle (2) einen Raum von komplementärer Form zu einer Montageklaue (20, 24) definiert, wobei die ersten und zweiten Halteklauen (4, 5) derart positioniert sind, dass die ersten bzw. zweiten Montageklauen (20, 24) zwischen die Halteklauen (4, 5) und die Hülle (2) eingesetzt werden, wenn das Abscheidergehäuse (10) die Öffnung verschließt.

8. Wärmevorrichtung nach Anspruch 7, **dadurch gekennzeichnet, dass** die Maximalhöhe einer Halteklaue senkrecht auf die Oberfläche der Hülle kleiner oder gleich zweimal die Dicke des Abscheidergehäuses ist.

9. Kraftfahrzeug, das mit einer Wärmevorrichtung nach einem der Ansprüche 7 oder 8 ausgestattet ist.

## Claims

1. Filter trap (10) for a motor vehicle thermal device (1), said trap (10) made of polymer material being of planar elongated shape, having a length L and having two longitudinal edges (12, 14) extending along the length thereof connected by two lateral edges (16, 18) extending along the width thereof, said trap (10) comprising:
- a first assembly tab (20) extending in the extension of the trap (10) along the length thereof, said first assembly tab (20) being fixed to a lateral edge (16),
- a snap-coupling means (22) designed to block said trap (10) in a direction (N) perpendicular to the plane of the trap, said snap-coupling means (22) being fixed to a longitudinal edge (12),
- a second assembly tab (24) extending in the extension of the trap (10) in a direction perpendicular to the first assembly tab (20), said second assembly tab (24) being fixed to the longitudinal edge (14),
said trap (10) being designed and arranged so as to have a sufficient flexibility along the length thereof to permit the twisting of said trap about a longitudinal torsion axis (T) of the trap,
**characterized in that** said snap-coupling means is located in the vicinity of the lateral edge (18) which does not bear the first assembly tab (20) and **in that** the second assembly tab (24) does not comprise the snap-coupling means (22) and is located in the vicinity of the lateral edge (18) which does not bear the first assembly tab (20).

2. Trap (10) according to Claim 1, **characterized in that** it is designed and arranged so as to permit an angle of torsion (α) of 15° to 50° between the two lateral edges (16, 18) of the trap, preferably an angle of torsion (α) of 20° to 45°.

3. Trap (10) according to either of Claims 1 and 2, **characterized in that** the snap-coupling means (22) and the second assembly tab (24) are arranged symmetrically relative to the longitudinal torsion axis (T) of the trap.

4. Trap (10) according to one of Claims 1 to 3, **characterized in that** the snap-coupling means (22) and the second assembly tab (24) are remote from the adjacent lateral edge by a distance D which is less than or equal to L/3, preferably less than or equal to L/4 or even L/6.

5. Trap (10) according to one of Claims 1 to 4, **characterized in that** the first and second assembly tabs (20, 24) have a thickness which is less than a thickness of said trap (10), for example equal to a maximum of 90%, or even equal to a maximum of 70%, of the thickness of said trap.

6. Trap (10) according to one of Claims 1 to 5, **characterized in that** the first and second assembly tabs (20, 24) have a face extending in the extension of a face (11) of the trap.

7. Motor vehicle thermal device (1) comprising a casing (2) perforated by an opening for access to a filter, said casing (2) being provided with a filter trap (10) according to one of Claims 1 to 6, said filter trap being shaped so as to seal said opening, said thermal device comprising, on the periphery of said opening:
- a means for engagement (3) which is shaped so as to cooperate with the snap-coupling means (22) of the trap (10) in order to block the trap in a direction (N) perpendicular to the plane thereof,
- a first retaining tab (4) and a second retaining tab (5), each retaining tab (4, 5) defining with the casing (2) a space having a shape which is complementary to an assembly tab (20, 24), the first and second retaining tabs (4, 5) being positioned such that the first and second assembly tabs (20, 24) are respectively inserted between said retaining tabs (4, 5) and the casing (2) when said trap (10) seals the opening.

8. Thermal device according to Claim 7, **characterized in that** the maximum height of a retaining tab perpendicular to the surface of the casing is less than or equal to twice the thickness of the trap.

9. Motor vehicle provided with a thermal device according to either of Claims 7 and 8.
